# EUROPÄISCHE PATENTSCHRIFT

(11) **EP 3 809 212 B1**
(45) Veröffentlichungstag und Bekanntmachung des Hinweises auf die Patenterteilung: **18.05.2022**
(21) Anmeldenummer: 19203291.0
(22) Anmeldetag: 15.10.2019
(51) Int. Cl.: G05B 19/042, B25J 15/00, B65G 47/74, G05B 23/02

(54) **SMARTGRIPPER MIT EINER DATENVERARBEITUNGSEINHEIT**
SMARTGRIPPER COMPRISING A DATA PROCESSING UNIT
SMARTGRIPPER AVEC UNE UNITÉ DE TRAITEMENT DE DONNÉES

(43) Veröffentlichungstag der Anmeldung: 21.04.2021
(73) Patentinhaber: Tyrolon-Schulnig GmbH, 6395 Hochfilzen (AT)
(72) Erfinder: Schulnig, Elmar, 6392 St. Jakob i.H. (AT)
(74) Vertreter: Rupprecht, Kay

(56) Entgegenhaltungen:
- WO-A2-2012/009821
- DE-A1-102014 209 041
- US-A1- 2014 074 286

## Beschreibung

Die vorliegende Erfindung betrifft ein System aufweisend eine Greifvorrichtung mit zwei Greifarmen und mindestens eine Datenverarbeitungseinheit.

Dabei betrifft die Erfindung das Thema "Internet of Things" (IoT), weshalb das erfindungsgemäße System auch als "Smartgripper Unit" bezeichnet wird. IoT beschreibt üblicherweise die Vernetzung von Gegenständen mit Netzwerken wie beispielsweise dem Internet, damit diese Gegenstände vorzugsweise selbstständig über diese Netzwerke kommunizieren und so verschiedene Aufgaben für den Besitzer erledigen können. Im deutschsprachigen Raum wird IoT auch als "Industrie 4.0" bezeichnet. Der Anwendungsbereich erstreckt sich dabei von einer allgemeinen Informationsversorgung, über automatische Bestellungen bis hin zu Warn- und Notfallfunktionen. Dies ist insbesondere durch die steigende Datenvernetzung von Geräten, die Abrufbarkeit von Informationen, beispielsweise durch Mobiltelefone, sowie der verbesserten Miniaturisierung von elektronischen Komponenten möglich. Auch besteht ein Hauptaspekt des IoT darin, dass Gegenstände hierarchieunabhängig miteinander kommunizieren können.

Ein Greifarm, wie z.B. in der DE29713510 und WO2006/089610 bekannt ist, bildet einen Teil einer Vorrichtung, insbesondere einer Greifvorrichtung (auch "Klammergreifer" genannt), welche zum Bewegen eines Greifabschnitts des Greifarms von einer Öffnungsstellung in eine Greifstellung oder umgekehrt ausgebildet ist.

Diese Bewegung wird insbesondere durch ein Steuermittel kontrolliert. Der Greifarm selbst weist eine Bohrung zur Lagerung eines Lagerbolzens zum schwenkbaren Befestigen des Greifarms in der Vorrichtung, und einen Kraftspeicher zum Bewegen des Greifabschnitts des Greifarms von der Greifstellung in die Öffnungsstellung oder umgekehrt auf.

Ein solcher Greifarm ist dem Grunde nach aus dem Stand der Technik bekannt und wird bei der fließbandtechnischen Bearbeitung von Behältern verwendet. Insbesondere beim oder zum Reinigen, Befüllen oder Verschließen werden die Behälter bei einer Station mittels eines rotierenden Transport- bzw. Klammersterns, der eine Vielzahl von koaxial angeordneten Greifvorrichtungen mit mindestens einem Greifarmpaar aufweist, ergriffen und zur nächsten Station im Prozess transportiert.

Das Stand-der-Technik Dokument US 2014/0074286 A1 offenbart eine Robotersteuerung 40, die sich am Kundenstandort 1 befindet, und einen Robotersteuerungsprozessor 42 mit lokaler Rechenleistung zur Überwachung, Erfassung und Analyse aller relevanten Informationen oder Daten, die sich auf den Zustand des mindestens einen Roboters 20 beziehen, sowie einen Robotersteuerungsspeicher 44 zur Speicherung der zugehörigen Daten, umfasst.

Das Stand-der-Technik Dokument DE 10 2014 209 041 A1 offenbart einen Roboterarbeitsplatz, aufweisend einen Roboter mit einer Robotersteuerung und mit einem mehrere Gelenke und die Gelenke verbindende Glieder aufweisenden Roboterarm, dessen Gelenke zu verstellen sind, um ein von dem Roboterarm gehaltenes Werkzeug durch Einstellen der Gelenke des Roboterarms im Raum zu halten und/oder zu bewegen, wobei das Werkzeug als eine Schraubvorrichtung ausgebildet ist, die ein Erfassungsmittel zum Erfassen und/oder Anzeigen eines von der Schraubvorrichtung auf eine Schraube oder eine Mutter aufgebrachten Drehmoments aufweist, wobei die Robotersteuerung ausgebildet und/oder eingerichtet ist, zusätzlich wenigstens ein mittels des Roboterarms abgestütztes Reaktionsmoment zu erfassen, welches durch ein von der Schraubvorrichtung auf die Schraube oder die Mutter aufgebrachtes Drehmoment in den Roboterarm eingeleitet wird.

Das Stand-der-Technik Dokument WO 2012/009821 A2 offenbart eine Vorrichtung für die Steuerung eines Prozessverlaufes bei der Herstellung von Teilen in einem Werkzeug in einer Herstellvorrichtung mit oder ohne anschließender Ausschussseparierung umfassend einen Sensor, der am Werkzeug angebracht ist zur Erfassung von Messwerten während dem Herstellprozess sowie eine Datenverarbeitungsanlage umfassend ein Display zum Einlesen und Darstellen der erfassten Messwerte und ein Ausgabemittel, welches mit der Datenverarbeitungsanlage verbunden ist, wobei ein Benutzer einen oder mehrere Sollparameter in die Datenverarbeitungsanlage eingeben kann, und in der Datenverarbeitungsanlage auf Grund einer Analyse dieser Sollparameter und der erfassten Messwerte eine Ausgabegröße ermittelbar ist, welche über das Ausgabemittel zur Herstelleinrichtung übertragbar ist zum Steuern des Prozessverlaufs, wobei der oder die Sollparamete auf analoge Weise durch den Benutzer einlesbar sind.

Unter dem Begriff "Behälter" sind nachstehend insbesondere, aber nicht ausschließlich flaschenartige Behälter zu verstehen, also zum Beispiel Getränkeflaschen aus Glas oder Kunststoff, aber auch Fläschchen für Arzneimittel oder Parfüm. Unter den Begriff fallen ebenfalls andere Glas- oder Kunststoffbehälter, die ähnlich zu einer Flasche insbesondere einen Hals oder eine zur Öffnung verjüngende Struktur aufweisen.

Beim Greifen und Transportieren von Behältern wird ein Greifarm verschiedenen Druck-, Zug- und/oder Scherkräften ausgesetzt. Diese Kräfte können zu einer Verbiegung oder gar einem Bruch des Greifarms führen und begrenzen dadurch unter anderem die Betriebslaufzeit bzw. Lebensdauer eines Greifarms.

Ebenso kommt ein Greifarm während seiner Betriebslaufzeit mit mehreren hunderttausenden Behältern in Kontakt und führt genauso oft eine Greif- oder Öffnungsbewegung aus. Dadurch werden verschiedene mechanische Komponenten des Greifarms, wie z.B. des Greifabschnitts (für den Behälter), der Bohrung (für den Lagerbolzen) und des Betätigungsabschnitts (für das Steuermittel), abgenutzt, was wiederum zu einer Fehlfunktion führen kann.

Aus dem Stand der Technik ergibt sich somit die Notwendigkeit, den Greifarm zu identifizieren, den Zustand des Greifarms, insbesondere während des Betriebs, zu ermitteln und/oder Vorhersagen über die zukünftige Betriebstauglichkeit oder die zu erwartende Lebensdauer treffen zu können. Dadurch sollen beispielsweise Reinigungs- und Abfüllanlagen für Flaschen besser überwacht und schneller gewartet werden, um Wartungsarbeiten frühzeitig zu erkennen und kurz zu halten. Auch hat der Benutzer ein berechtigtes Interesse daran, den aktuellen Zustand seiner Greifarme jederzeit und gegebenenfalls auch aus der Ferne kontrollieren zu können.

Der Erfindung liegt angesichts der zuvor genannten Nachteile und Probleme die Aufgabe zugrunde, die Eigenschaften und Daten des Greifarms elektronisch zu sammeln, zu verarbeiten, und dem Benutzer bereitzustellen. Insbesondere hat der Benutzer ein Interesse an Zustandsberechnungen und Vorhersagen zur Betriebsfähigkeit und Lebensdauer der Greifarme und/oder Greifvorrichtungen.

Die Aufgabe wird erfindungsgemäß durch ein System mit den Merkmalen des Anspruchs 1 gelöst.

Bevorzugte Ausgestaltungen, Weiterbildungen und Varianten sind Gegenstand der Unteransprüche.

Unter dem Begriff "aufbereiten" sind in diesem Zusammenhang die bekannten mathematischen Operationen zusammengefasst, wie beispielsweise Vergleich, UND, ODER, XOR, XNOR, Multiplikation, Division, Addition, Subtraktion, und dergleichen.

Mit dem Begriff "Zustandsdaten" werden insbesondere, aber nicht ausschließlich, Information über eine Zustandsgröße, beispielsweise Abnutzung, maximale Belastung, aber auch die Anzahl von Greifzyklen, eine Druckkraft, welche auf die Greifeinrichtung, insbesondere auf den Greifarm wirkt, eine Materialermüdung, eine Materialabnutzung und/oder ein Bruch einer Komponente, und dergleichen, einer Greifvorrichtung zum Greifen, Halten und Führen von insbesondere flaschenartigen Behältern bezeichnet.

Die Datenverarbeitungseinheit des erfindungsgemäßen Systems weist eine Datenaufbereitungseinheit auf, die zur Aufbereitung der Daten der Greifvorrichtung dient. Durch diese Aufbereitung wird ein Zustand der Greifvorrichtung berechnet. Alternativ oder zusätzlich ist es durch die Aufbereitung möglich, eine Vorhersage zur Betriebsfähigkeit und/oder der Lebensdauer der Greifvorrichtung zu treffen. Hierzu werden beispielsweise mehrere Datensätze der Greifvorrichtung miteinander verglichen, um Abnutzungserscheinungen oder unzulässige Belastungen vorzeitig zu erkennen. Erfindungsgemäß werden mehrere Datensätze der Vergangenheit miteinander und/oder mit aktuellen Daten verglichen, um mittels Extrapolation eine Aussage für einen zukünftigen Zustand der Greifvorrichtung beziehungsweise der Greifarme zu treffen. Weiterhin weist die Datenverarbeitungseinheit eine Datendarstellvorrichtung auf, um die aufbereiteten Daten der Greifvorrichtung für einen Benutzer darzustellen. Diese Darstellung kann beispielsweise direkt auf einen Bildschirm erfolgen oder dezentral von einem Benutzer mittels eines Web-Interfaces abgerufen werden.

Durch eine derartige Datenverarbeitungseinheit ist es möglich, basierend auf den Eigenschaften und Daten des Greifarms, eine Aussage über den Zustand der Greifvorrichtung bzw. eine Vorhersage zur Betriebsfähigkeit bzw. Lebensdauer der Greifvorrichtung zu treffen. Diese Information kann von einem Benutzer entweder zentral an der Datenverarbeitungseinheit betrachtet werden, oder der Benutzer kann beispielsweise mittels eines mobilen Gerätes auf ein Web-Interface zugreifen und sich diese Information darstellen lassen.

Vorzugsweise weist die Datenaufbereitungseinheit des erfindungsgemäßen Systems Mittel zum Korrelieren der Daten der Greifvorrichtung auf, insbesondere einen oder mehrere Verarbeitungs-Filter.

Der Begriff "Verarbeitungs-Filter" bezeichnet im Folgenden ein Filter, das als Bauteil oder auch als Software bzw. Computerprogramm realisiert werden kann, und Daten verarbeitet.

Durch die Verwendung eines Mittels zur Korrelation, beispielsweise eines Verarbeitungs-Filters, werden Korrelationen und Zusammenhänge zwischen den Daten, insbesondere zwischen den Zustandsdaten der Greifvorrichtung erkennbar, die anhand der einzelnen Daten für sich betrachtet nicht erkennbar sind.

In einer weiteren Ausführungsform des erfindungsgemäßen Systems weist das oder die Verarbeitungs-Filter einen oder mehrere Multi-Hypothesen Filter auf. Hierdurch kann die Korrelation und die Zusammenhänge der Daten weiter herausgearbeitet werden. Ein Multi-Hypothesen-Filter verarbeitet die Daten nach einem oder mehreren definierbaren mathematischen Modellen. Auf diese Weise werden weitere Korrelationen und Kreuzverbindungen zwischen den Daten geschaffen.

Vorteilhafterweise verarbeitet und korreliert die Datenverarbeitungseinheit des erfindungsgemäßen Systems neben den Daten der Greifvorrichtung auch die Daten anderer Entitäten, beispielsweise die Daten eines Überwachungssystems. Durch eine Einbeziehung externer Entitäten kann die Berechnung des Zustands der Greifvorrichtung bzw. die Vorhersage zur Betriebsfähigkeit bzw. Lebensdauer weiter verbessert werden. Dies ist dadurch begründet, dass beispielsweise externe Einflussfaktoren, die nicht direkt Daten der Greifvorrichtung darstellen, berücksichtigt werden können. So ist es denkbar, dass durch ein Überwachungssystem etwaiger unbefugter Zugriff mit einer Datenänderung der Greifvorrichtung korreliert wird.

Ebenfalls hat es sich als vorteilhaft erwiesen, dass die durch die Datenverarbeitungseinheit des erfindungsgemäßen Systems zur Verfügung gestellten Daten menschenlesbar sind. Hierdurch wird im Falle einer möglichen Fehleranalyse eine einfache und kostengünstige Ausführungsform bereitgestellt.

In einer weiteren bevorzugten Ausführungsform sind die der Datenverarbeitungseinheit des erfindungsgemäßen Systems zur Verfügung gestellten Daten und die von der Datenverarbeitungseinheit zur Verfügung gestellten Daten maschinenlesbar, insbesondere maschinenlesbar nach einem Industriestandard. Hierdurch können die Daten von der Datenverarbeitungseinheit hierarchieunabhängig aufbereitet werden. Eine Umformatierung der Daten ist folglich nicht notwendig. Eine derartige Maschinenlesbarkeit kann nach einer Industrienorm, wie beispielsweise der DIN-Norm DIN SPEC 91345 und/oder der internationale Vornorm IEC PAS 63088 sichergestellt werden. Hierbei sei anzumerken, dass die beispielhafte Nennung dieser Industrienormen keinesfalls andere Industrienormen ausschließt.

Abhängig von der Architektur der Datenverarbeitungseinheit des erfindungsgemäßen Systems kann diese ein Teil eines FPGAs, eines Mehrzweckcomputers, eines mobilen Gerätes, eines Servers, oder einer cloudbasierten Lösung sein. Hierdurch ist es möglich, dass die Datenverarbeitungseinheit an den jeweiligen Verwendungsort und den dort zur Verfügung stehenden Platz, angepasst wird. Auch ist es möglich, dass abhängig von der benötigten Rechenleistung die Datenverarbeitungseinheit entsprechend dimensioniert wird.

Eine Datenerzeugungseinheit ist insbesondere eine Datenerzeugungseinheit zur Erzeugung von Zustandsdaten, die eine Information über eine Zustandsgröße einer Greifvorrichtung zum Greifen, Halten und Führen von insbesondere flaschenartigen Behältern enthalten, wobei die Datenerzeugungseinheit eine Erfassungseinheit zur Erfassung der zumindest einen Zustandsgröße der Greifvorrichtung, und eine Datenvorverarbeitungseinheit zur Erzeugung der Zustandsdaten aufweist.

Eine Datenübertragungseinheit ist insbesondere eine Datenübertragungseinheit für einen Greifarm einer Greifvorrichtung zum Greifen, Halten und Führen von insbesondere flaschenartigen Behältern oder für die Greifvorrichtung, wobei die Datenübertragungseinheit ausgelegt ist, Daten von einer Datenerzeugungseinheit und/oder einem Datenspeicher des Greifarms und/oder der Greifvorrichtung zu empfangen, und die Daten basierend auf den empfangenen Daten an eine Datenempfängereinheit zu senden, und insbesondere Daten von der Datenempfängereinheit zu empfangen, wobei die Datenübertragungseinheit ausgebildet ist, in, an, auf oder neben dem Greifarm oder der Greifvorrichtung angeordnet, eingesetzt und/oder integriert zu werden/sein.

Vorteilhafterweise sind die Datenerzeugungseinheit, die Datenübertragungseinheit und die Datenverarbeitungseinheit plug-and-play fähig. Hierdurch wird eine kostengünstige Möglichkeit der Aufrüstung bereits existierender Systeme geschaffen. Auch entfallen durch die plug-and-play Fähigkeit kostenintensive und aufwendige Konfigurationsroutinen, welche zu einer langen Stillstandzeit der Greifvorrichtung führen.

Beispielhaft wird auch ein nicht durch die Ansprüche abgedecktes Verfahren zum Betrieb einer Datenverarbeitungseinheit beschrieben, umfassend die folgenden Schritte:
Empfangen von Daten einer Greifvorrichtung,
Aufbereiten der Daten der Greifvorrichtung mittels einer Datenaufbereitungseinheit,
Präsentieren der aufbereiteten Daten mittels einer Datendarstellvorrichtung.

Das beispielhafte Verfahren bietet unter anderen den Vorteil, dass basierend auf den Eigenschaften und Daten des Greifarms, eine Aussage über den Zustand der Greifvorrichtung bzw. eine Vorhersage zur Betriebsfähigkeit bzw. Lebensdauer der Greifvorrichtung getroffen werden kann. Auf diese Information kann ein Benutzer entweder zentral oder auch mobil zugreifen.

Vorzugsweise umfasst der Schritt des Aufbereitens der Daten das Korrelieren der Daten der Greifvorrichtung. Durch das Korrelieren der Daten werden Zusammenhänge zwischen den Daten, insbesondere zwischen den Zustandsdaten der Greifvorrichtung erkennbar, die anhand der einzelnen Daten für sich betrachtet nicht erkennbar sind.

In einer weiteren beispielhaften Ausführungsform wird das Korrelieren der Daten der Greifvorrichtung nach dem Verfahren des "Multi-Hypothesen-Trackings" durchgeführt.

In diesem Zusammenhang versteht man unter dem Begriff "Multi-Hypothesen-Tracking" ein Verfahren, das einen Baum mit Wahrscheinlichkeiten für jeden Wert aufbaut, wodurch eine systematische und mathematische Lösung für das Problem der Datenaufbereitung bzw. der Datenvereinigung erreicht wird. Ein Vorteil des Multi-Hypothesen-Trackings ist die mit diesem Verfahren einhergehende hohe Verarbeitungsgeschwindigkeit auch großer Datenmengen. Dies ermöglicht eine Aufbereitung der Daten in Echtzeit bzw. nahezu Echtzeit.

Vorteilhafterweise werden bei der Korrelation der Daten neben den Daten der Greifvorrichtung die Daten anderer Entitäten, beispielsweise Daten eines Überwachungssystems mit den Daten der Greifvorrichtung korreliert. Durch eine Einbeziehung externer Entitäten kann die Berechnung des Zustands der Greifvorrichtung bzw. die Vorhersage zur Betriebsfähigkeit bzw. Lebensdauer weiter verbessert werden. Dies ist dadurch begründet, dass beispielsweise externe Einflussfaktoren, die nicht direkt Daten der Greifvorrichtung darstellen, berücksichtigt werden können. So ist es denkbar, dass durch ein Überwachungssystem etwaiger unbefugter Zugriff mit einer Datenänderung der Greifvorrichtung korreliert wird.

Ausführungsbeispiele der Erfindung werden nachfolgend anhand der Figuren näher erläutert. Diese zeigen in teilweise stark vereinfachten Darstellungen:
- Fig. 1: eine Datenverarbeitungseinheit gemäß einer ersten Ausführungsform,
- Fig. 2: ein System einer Datenverarbeitungseinheit und Greifarme einer Greifvorrichtung gemäß einer zweiten Ausführungsform, sowie
- Fig. 3: ein System mit einer Datenverarbeitungseinheit und einem Transportstern mit mehreren Greifvorrichtungen gemäß einer dritten Ausführungsform.

In den Figuren sind gleichwirkende Teile stets mit den gleichen Bezugszeichen dargestellt.

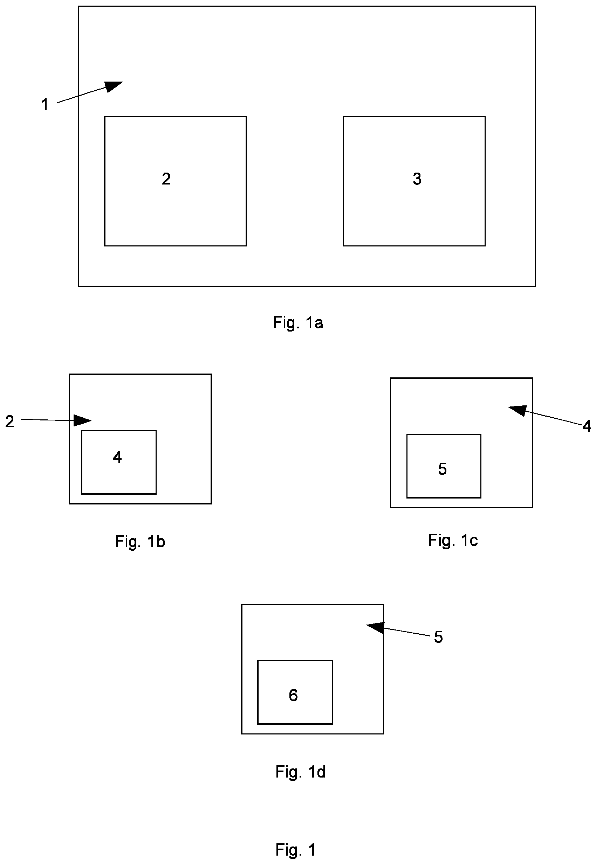

Die Figur 1 ist unterteilt in die Unterfiguren 1a bis 1d. Allgemein ist die Figur 1 eine schematische Darstellung der Datenverarbeitungseinheit, wobei die Unterfiguren 1a bis 1d mit alphabetischer Reihenfolge mehr ins Detail gehen. Die Unterfigur 1a zeigt die Datenverarbeitungseinheit 1, welche eine Datenaufbereitungseinheit 2 und eine Datendarstellvorrichtung 3 aufweist. Selbstverständlich ist es dem Fachmann bekannt, dass es sich auch um mehrere Datenverarbeitungseinheiten und ebenso um mehrere Datendarstellvorrichtungen handeln kann, wobei in der Unterfigur 1a exemplarisch nur jeweils eine Datenaufbereitungseinheit 2 und eine Datendarstellvorrichtung 3 dargestellt ist. Die Datenaufbereitungseinheit 2 ist ausgebildet, die Daten der Greifeinrichtung (nicht eingezeichnet) aufzubereiten. Anhand dieser aufbereiteten Daten kann ein Zustand der nicht abgebildeten Greifvorrichtung berechnet werden. Auch ist es möglich, dass durch diese Aufbereitung eine Vorhersage zur Betriebsfähigkeit, bzw. eine Vorhersage der Lebensdauer ermöglicht wird. Diese aufbereiteten Daten können mit einer Datendarstellvorrichtung 3, beispielsweise einen Monitor, einen Fernseher, oder auch ein mobiles Endgerät, dargestellt werden. Auch ist es möglich, dass diese aufbereiteten Daten durch ein Web-Interface präsentiert werden, auf das ein Benutzer zugreifen kann.

Die Unterfigur 1b zeigt, dass die Datenaufbereitungseinheit 2 ein Mittel zum Korrelieren 4 der Daten der nicht abgebildeten Greifvorrichtung aufweist. Auch hier ist es für den Fachmann selbstverständlich, dass anstatt des dargestellten einen Mittels zum Korrelieren 4, mehrere Mittel zum Korrelieren vorgesehen werden können. Mithilfe einer derartigen Korrelation der Daten der nicht dargestellten Greifvorrichtung können durch mathematische Berechnungen Aussagen und Wahrscheinlichkeiten über bzw. für bestimmte Zustände der Greifvorrichtung getroffen und dargestellt werden.

In der Unterfigur 1c ist dargestellt, dass es sich bei dem Mittel zum Korrelieren 4 der Daten der Greifvorrichtung um einen oder mehrere Verarbeitungsfilter 5 handelt. Das Verarbeitungsfilter 5 kann beispielsweise in Software oder Hardware realisiert werden und auf die Bedürfnisse der Datenverarbeitungseinheit 1 und/oder der Greifvorrichtung (nicht abgebildet) ausgerichtet sein.

Die Unterfigur 1d zeigt schließlich, dass das Verarbeitungs-Filter 5 einen oder mehrere Multi-Hypothesen Filter 6 aufweist. Das Multi-Hypothesen-Filter 6 verarbeitet die aufzubereitenden Daten nach einem oder mehreren definierbaren mathematischen Modellen. Auf diese Weise werden Korrelationen und Kreuzverbindungen zwischen den Daten geschaffen. Das Multi-Hypothesen-Filter 6 kann einen oder eine Vielzahl von Dateneingängen bzw. -ausgängen (nicht abgebildet) aufweisen und beispielsweise mit einer nicht abgebildeten Selbstoptimierungseinheit ausgestattet oder verbunden sein. So ist es möglich, dass in der nicht abgebildeten Selbstoptimierungseinheit eine künstliche Intelligenz, wie beispielsweise ein künstliches neuronales Netzwerk integriert ist, welche entweder eigenständig oder in Verbindung mit dem Multi-Hypothesen Filter 6 eine Datenoptimierung vornimmt.

In der Figur 1 nicht abgebildet ist die Möglichkeit, dass die Datenverarbeitungseinheit 1 neben den Daten der Greifvorrichtung 7 auch die Daten anderer Entitäten, beispielsweise Daten eines Überwachungssystems verarbeitet und mit den Daten der Greifvorrichtung 7 korreliert. Als ein Beispiel kann eine Instandsetzungsarbeit angeführt werden, im Zuge derer eine Person unerlaubterweise auf einen in der Greifvorrichtung montierten Greifarm tritt. Durch eine nicht abgebildete Datenerzeugungseinheit wird folglich eine Druckbelastung gemessen, welche jedoch zu keinem bekannten Muster für eine während des Betriebs auftretende Druckbelastung passt. Hierfür können seitens der Datenverarbeitungseinheit Daten einer anderen Entität, im beschriebenen Beispiel Daten einer Überwachungskamera hinzugezogen werden und derart mit der Druckbelastung korreliert werden, dass die Daten der Überwachungskamera angezeigt werden, wenn die Druckbelastung auf einer Datendarstelleinheit angezeigt wird.

Zur erleichterten Fehlersuche ist es auch möglich, dass die durch die Datenverarbeitungseinheit 1 zur Verfügung gestellten Daten menschenlesbar sind.

Alternativ oder zusätzlich hierzu ist es möglich, dass die der Datenverarbeitungseinheit 1 zur Verfügung gestellten Daten und die von der Datenverarbeitungseinheit 1 zur Verfügung gestellten Daten maschinenlesbar sind, insbesondere maschinenlesbar nach einem Industriestandard. Im Bereich der Industrie 4.0 gibt es eine Vielzahl von Standards, Vorstandards und Normen, deren Aufzählung und Nennung den Rahmen dieser Anmeldung sprengen würde. Daher sei auf zwei Normen hingewiesen, die DIN-Norm DIN SPEC 91345 und die internationale Vornorm IEC PAS 63088, welche als Beispiele für eine Maschinenlesbarkeit der zur Verfügung gestellten Daten dienen sollen. Selbstverständlich schließt diese beispielhafte Nennung der Industrienormen keinesfalls andere Normen aus.

Ebenfalls nicht abgebildet in der Figur 1 ist die Möglichkeit, dass die Datenverarbeitungseinheit 1 Teil eines FPGAs, eines Mehrzweckcomputers, eines mobilen Gerätes, eines Servers, oder einer cloudbasierten Lösung ist. Allgemein gesprochen kann die Datenverarbeitungseinheit 1 beliebig an das jeweilige Einsatzgebiet und den örtlichen Gegebenheiten der Greifvorrichtung angepasst werden.

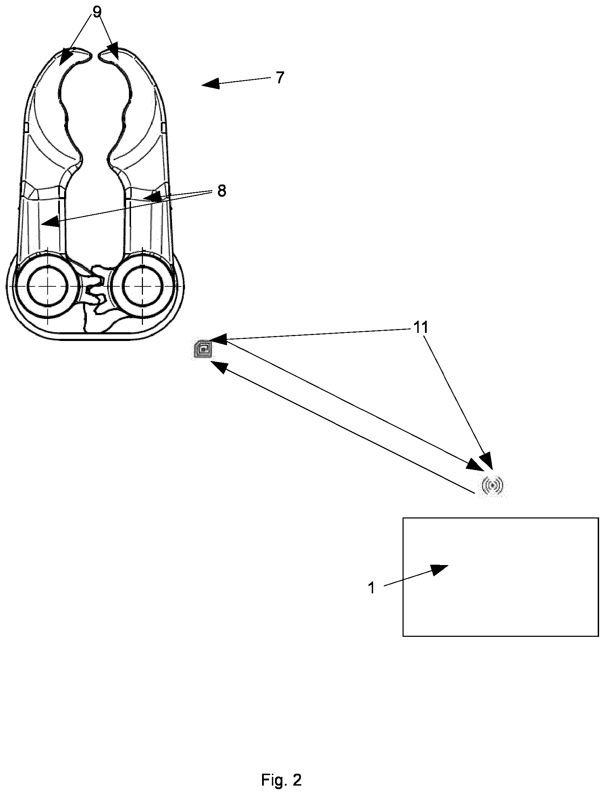

Die Figur 2 zeigt ein System einer Datenverarbeitungseinheit und Greifarme einer Greifvorrichtung gemäß einer zweiten Ausführungsform. Zur besseren Übersichtlichkeit wurde auf eine detaillierte Darstellung der Datenverarbeitungseinheit 1 verzichtet. Die Datenverarbeitungseinheit 1 der Figur 2 ist eine Datenverarbeitungseinheit 1 wie im Kontext der Figur 1 beschrieben.

Die Figur 2 zeigt exemplarisch eine Greifvorrichtung 7 mit zwei Greifarmen 8 und zwei Greifabschnitten 9. Nicht abgebildet in der Figur 2 sind die Datenerzeugungseinheiten, welche sich beispielsweise im Bereich des Greifabschnitts, oder auch im Bereich des Greifarms befinden. Diese nicht abgebildeten Datenerzeugungseinheiten erzeugen Zustandsdaten, die eine Information über eine Zustandsgröße einer Greifvorrichtung zum Greifen, Halten und Führen von insbesondere flaschenartigen Behältern enthalten, wobei die Datenerzeugungseinheit eine Erfassungseinheit zur Erfassung der zumindest einen Zustandsgröße der Greifvorrichtung, und eine Datenvorverarbeitungseinheit zur Erzeugung der Zustandsdaten aufweisen. Diese Zustandsdaten werden mittels einer Datenübertragungseinheit 11 der Datenverarbeitungseinheit 1 zur Verfügung gestellt. Die Datenübertragungseinheit 11 kann beispielsweise eine drahtlose oder drahtgebundene Kommunikationsstrecke sein. Diese von der Datenübertragungseinheit 11 an die Datenverarbeitungseinheit 1 übertragenen Zustandsdaten werden wie in Bezug auf die Figur 1 beschrieben durch die Datenverarbeitungseinheit 1 verarbeitet.

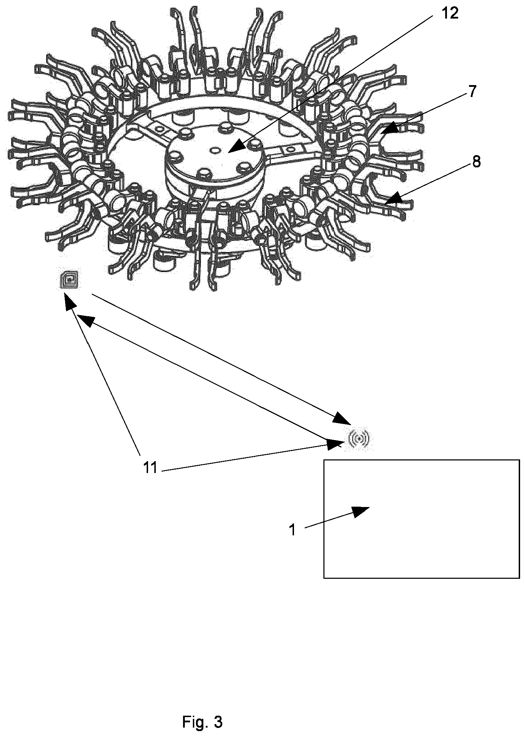

Die Figur 3 zeigt ein System mit einer Datenverarbeitungseinheit und einem Transportstern mit mehreren Greifvorrichtungen gemäß einer dritten Ausführungsform. In dieser Ausführungsform ist exemplarisch ein Transportstern 12 abgebildet, welcher branchenüblich eine Vielzahl von Greifvorrichtungen 7 aufweist. Obwohl diese Greifvorrichtungen 7 in der Figur 3 einen anderen Aufbau aufweisen als die Greifvorrichtungen 7 der Ausführungsform der Figur 2, sind sie in der Funktionalität gleichwertig. Jede einzelne Greifvorrichtung 7 weist mehrere Greifarme 8 auf, welche mit nicht abgebildeten Datenerzeugungseinheiten versehen sind. Die Datenerzeugung ist identisch zu der Datenerzeugung, wie in der Ausführungsform der Figur 2 beschrieben. Ein Sender der Datenübertragungseinheit 11 ist in der Figur 3 exemplarisch neben dem Transportstern angeordnet. Selbstverständlich ist es auch möglich, dass dieser Sender auf oder unter dem Transportstern 12 angebracht ist. Mittels eines Empfängers, welcher bei oder in der Datenverarbeitungseinheit 1 vorgesehen ist, werden Zustandsdaten der einzelnen Greifvorrichtungen 7 des Transportsterns 12 an die Datenverarbeitungseinheit 1 gesandt. Die Verarbeitung seitens der Datenverarbeitungseinheit 1 findet analog zu der ersten Ausführungsform statt.

### Bezuaszeichenliste

- 1: Datenverarbeitungseinheit
- 2: Datenaufbereitungseinheit
- 3: Datendarstellvorrichtung
- 4: Mittel zum Korrelieren
- 5: Verarbeitungs-Filter
- 6: Multi-Hypothesen Filter
- 7: Greifvorrichtung
- 8: Greifarm
- 9: Greifabschnitt
- 10: Datenerzeugungseinheit
- 11: Datenübertragungseinheit
- 12: Transportstern

## Patentansprüche

1. System aufweisend eine Greifvorrichtung (7) mit zwei Greifarmen (8) und mindestens eine Datenverarbeitungseinheit (1), wobei die Greifvorrichtung (7) zum Greifen, Halten und Führen von flaschenartigen Behältern eingerichtet ist, und wobei die Greifvorrichtung (7) zum schwenkbaren Bewegen eines Greifabschnitts (9) der zwei Greifarme (8) von einer Öffnungsstellung in eine Greifstellung oder umgekehrt ausgelegt ist, und wobei die zwei Greifarme (8) jeweils eine Datenerzeugungseinheit (10) und eine Datenvorverarbeitungseinheit aufweisen; und wobei das System ferner folgendes aufweist:
eine Datenübertragungseinheit (11), welche dazu eingerichtet ist, die von den Datenvorverarbeitungseinheiten und den Datenerzeugungseinheiten (10) vorverarbeiteten und erzeugten Daten der zwei Greifarme (8) an die Datenverarbeitungseinheit (1) zur Verarbeitung von Zustandsdaten der Greifvorrichtung (7) zu übertragen, wobei die Datenverarbeitungseinheit (1) aufweist:
eine Datenaufbereitungseinheit (2), welche dazu eingerichtet ist, die von der Greifvorrichtung (7) empfangenen Daten aufzubereiten, wobei durch das Aufbereiten ein Zustand der Greifvorrichtung (7) berechnet wird und eine Vorhersage zur Betriebsfähigkeit und Lebensdauer ermöglicht wird, wobei bei dem Aufbereiten mehrere Datensätze der Greifvorrichtung (7) der Vergangenheit miteinander und mit aktuellen Daten verglichen werden, um mittels Extrapolation eine Aussage für einen zukünftigen Zustand, insbesondere von Abnutzungserscheinungen oder unzulässigen Belastungen der Greifvorrichtung (7) zu treffen; und
eine Datendarstellvorrichtung (3) zur Darstellung der aufbereiteten Daten der Greifvorrichtung (7).

2. System nach Anspruch 1,
wobei die Datenaufbereitungseinheit (2) Mittel zum Korrelieren (4) der Daten der Greifvorrichtung (7) aufweist.

3. System nach Anspruch 2,
wobei die Mittel zum Korrelieren (4) der Daten der Greifvorrichtung (7) einen oder mehrere Verarbeitungs-Filter (5) aufweisen.

4. System nach Anspruch 3,
wobei der oder die Verarbeitungs-Filter (5) einen oder mehrere Multi-Hypothesen Filter (6) aufweisen.

5. System nach einem der Ansprüche 1 bis 4, wobei die Datenverarbeitungseinheit (1) eingerichtet ist, neben den von der Greifvorrichtung (7) empfangenen Daten auch Daten anderer Entitäten, beispielsweise Daten eines Überwachungssystems zu verarbeiten und mit den Daten der Greifvorrichtung (7) zu korrelieren.

6. System nach einem der Ansprüche 1 bis 5, wobei die durch die Datenverarbeitungseinheit (1) zur Verfügung gestellten Daten menschenlesbar sind.

7. System nach einem der Ansprüche 1 bis 6, wobei die der Datenverarbeitungseinheit (1) zur Verfügung gestellten Daten und die von der Datenverarbeitungseinheit (1) zur Verfügung gestellten Daten maschinenlesbar, oder maschinenlesbar nach einem Industriestandard, sind.

8. System nach einem der Ansprüche 1 bis 7, wobei die Datenverarbeitungseinheit (1) Teil eines FPGAs, eines Mehrzweckcomputers, eines mobilen Gerätes, eines Servers, oder einer cloudbasierten Lösung ist.

9. System nach Anspruch 1, wobei die Datenerzeugungseinheit (10), die Datenübertragungseinheit (11) und die Datenverarbeitungseinheit (1) plug-and-play fähig sind.

## Claims

1. A system comprising a gripping device (7) with two gripper arms (8) and at least one data processing unit (1), wherein the gripping device (7) is configured for gripping, holding and guiding bottle-like containers, and wherein the gripping device (7) is designed to pivotally move a gripping section (9) of the two gripper arms (8) from an open position to a gripping position or vice versa, and wherein the two gripper arms (8) each comprise a data generation unit (10) and a data preprocessing unit; and wherein the system further comprises the following:
a data transmission unit (11) configured to transmit the data of the two gripper arms (8) preprocessed and generated by the data preprocessing units and data generation units (10) to the data processing unit (1) for processing the status data of the gripping device (7), wherein the data processing unit (1) comprises:
a data preparation unit (2) configured to prepare the data received from the gripping device (7), wherein a status of the gripping device (7) is calculated by way of the preparation and an operability and service life prediction rendered possible, wherein multiple past data sets of the gripping device (7) are compared to one another and to current data during the preparation in order to extrapolate a statement relative to a future state, in particular signs of wear or impermissible loads on the gripping device (7); and
a data display device (3) for displaying the prepared data of the gripping device (7).

2. The system according to claim 1,
wherein the data preparation unit (2) comprises means for correlating (4) the data of the gripping device (7).

3. The system according to claim 2,
wherein the means for correlating (4) the data of the gripping device (7) comprises one or more processing filters (5).

4. The system according to claim 3,
wherein the one or more processing filters (5) comprise one or more multi-hypothesis filters (6).

5. The system according to one of claims 1 to 4, wherein in addition to the data received from the gripping device (7), the data processing unit (1) is configured to also process data from other entities, for example data from a monitoring system, and to correlate it with the data of the gripping device (7).

6. The system according to one of claims 1 to 5, wherein the data provided by the data processing unit (1) is human-readable.

7. The system according to one of claims 1 to 6, wherein the data provided to the data processing unit (1) and the data provided from the data processing unit (1) is machine-readable or machine-readable pursuant to an industry standard.

8. The system according to one of claims 1 to 7, wherein the data processing unit (1) is part of an FPGA, a general-purpose computer, a mobile device, a server or a cloud-based solution.

9. The system according to claim 1, wherein the data generation unit (10), the data transmission unit (11) and the data processing unit (1) are plug-and-play capable.

## Revendications

1. Système comportant un dispositif de préhension (7) avec deux bras de préhension (8) et au moins une unité de traitement de données (1), dans lequel le dispositif de préhension (7) est adapté pour la préhension, le maintien et le guidage de récipients du type bouteille, et dans lequel le dispositif de préhension (7) est conçu pour un mouvement pivotant d'une section de préhension (9) des deux bras de préhension (8) à partir d'une position d'ouverture dans une position de préhension ou vice versa, et dans lequel les deux bras de préhension (8) comportent chacun une unité de génération de données (10) et une unité de prétraitement de données; et dans lequel le système comporte en outre :
une unité de transfert de données (11), qui est adaptée pour transférer les données des deux bras de préhension (8) prétraitées et générées par les unités de prétraitement de données et les unités de génération de données (10) à l'unité de traitement de données (1) pour traiter des données d'état du dispositif de préhension (7), dans lequel l'unité de traitement de données (1) comporte :
une unité de préparation de données (2), qui est adaptée pour préparer les données reçues par le dispositif de préhension (7), dans lequel par la préparation un état du dispositif de préhension (7) est calculé, et une prédiction concernant la capacité de fonctionnement et la durée de vie est rendu possible, dans lequel, pendant la préparation, plusieurs ensembles de données du dispositif de préhension (7) du passé sont comparés entre eux et avec des données actuelles, pour faire une assertion par l'intermédiaire de l'extrapolation concernant un état futur, surtout des signes d'usure ou des charges inadmissibles du dispositif de préhension (7) ; et
un dispositif de présentation de données (3) pour la présentation des données préparées du dispositif de préhension (7).

2. Système selon la revendication 1,
dans lequel l'unité de préparation de données (2) comporte des moyens de corrélation des données (4) du dispositif de préhension (7).

3. Système selon la revendication 2,
dans lequel les moyens de corrélation (4) des données du dispositif de préhension (7) comportent un ou plusieurs filtres de traitement (5).

4. Système selon la revendication 3,
dans lequel le ou les filtre(s) de traitement (5) comportent un ou plusieurs filtres multi-hypothèses (6).

5. Système selon l'une quelconque des revendications 1 à 4, dans lequel l'unité de traitement de données (1) est adaptée pour traiter, outre les données reçues du dispositif de préhension (7), aussi des données d'autres entités, par exemple des données d'un système de surveillance, et pour les mettre en corrélation avec les données du dispositif de préhension (7).

6. Système selon l'une quelconque des revendications 1 à 5, dans lequel les données fournies par l'unité de traitement de données (1) sont sous forme lisible par l'homme.

7. Système selon l'une quelconque des revendications 1 à 6, dans lequel les données fournies à l'unité de traitement de données (1) et les données fournies par l'unité de traitement de données (1) sont sous forme lisible par machine ou sous forme lisible par machine conformément à une norme industrielle.

8. Système selon l'une quelconque des revendications 1 à 7, dans lequel l'unité de traitement de données (1) fait partie d'un FPGA, d'un ordinateur polyvalent, d'un appareil mobile, d'un serveur ou d'une solution sur la base de cloud.

9. Système selon la revendication 1, dans lequel l'unité de génération de données (10), l'unité de transfert de données (11) et l'unité de traitement de données (1) sont dotées d'une fonction plug and play.
